# EUROPEAN PATENT SPECIFICATION

(11) **EP 0 776 712 B1**
(45) Date of publication and mention of the grant of the patent: **07.05.2003**
(21) Application number: 96118106.2
(22) Date of filing: 12.11.1996
(51) Int. Cl.: B21H 3/02, F16B 35/04

(54) **Method for the production of a special screw for hinges in furniture and screws obtained with this method**
Verfahren zur Herstellung von speziellen Schrauben für Möbelscharnier und durch dieses Verfahren hergestellte Schrauben
Méthode de fabrication de vis spéciale pour charnières de meuble et vis obtenues par cette méthode

(30) Priority: 29.11.1995 IT MI952487
(43) Date of publication of application: 04.06.1997
(73) Proprietor: FRABO S.r.l., 35033 Bresso di Teolo (PD) (IT)
(72) Inventor: Parodi, Giuseppe, 22053 Lecco (IT)
(74) Representative: Marietti, Giuseppe

(56) References cited:
- EP-A- 0 284 824
- EP-A- 0 428 317
- US-A- 3 746 067
- US-A- 4 261 402
- PATENT ABSTRACTS OF JAPAN vol. 004, no. 136 (M-033), 24 September 1980 & JP 55 092241 A (SHINJIYOU SEISAKUSHO:KK), 12 July 1980,

## Description

The present invention relates to a method for the production of a special screw for hinges in furniture. The invention relates further to a screw obtained with this method. In particular, the method of the present invention produces a screw for hinges in furniture comprising a threaded portion and a portion composed of a head tang.

Such screws are usually of the headless type and present either one or a pair of slots arranged in a crosslike fashion on the extremity of the screw opposite to the tang, said slots being preferably so shaped to allow the use of a cross-head or normal screwdriver.

A first method is known for the production of such screws comprising an initial phase, effected on the lathe, of cutting the thread and forming the head tang and a second phase of production of the slots by means of milling.

However, this method has the disadvantage of being very long and therefore expensive; besides, the production of the slots by means of milling causes, of necessity, the division of the extremity of the screw into four sectors which increases the brittleness of the screw and shortens its lifetime, because the sectors tend to break with the use of the screwdriver, thus making the screw unusable.

A second method is also known in which the screw is produced by die stamping; this method is also costly because of the costs of the dies and the presses necessary to the operation.

US-A-3,746,067 discloses a process of producing captive screws in which a blank, having a head and a two-part shank comprising a shoulder, is fitted into a sleeve; a groove is obtained adjacent to the shoulder by means of a die that forces some material into two projecting rings that are removed by grinding, and a thread is obtained on part of the screw by means of thread rolling dies.

EP-A-428317 discloses a process of producing anchor bolts in which a rod of uniform diameter is rolled by a pair of rolling dies to produce a surface groove of limited depth in which the anchoring portion of the bolt is subsequently fixed. Also in this document the rolling results in a limited displacement of material from the groove area.

The purpose of the present invention is to solve the aforementioned problems through a method for the production of special screws for hinges in furniture that is rapid and economic and that supplies a screw with the required resistance to breakup.

Such purpose is achieved by means of the present invention, which relates to a method for the production of a screw for hinges in furniture, according to claim 1.

The invention relates also to a screw for furniture according to claim 5.

The invention has various advantages compared to the state of the art, particularly since forming by rolling does not involve cutting the piece, thus improving the resistance to fatigue, and the method described allows rapid and economic production, with an excellent surface finish.

The invention will be described now in more detail with reference to the sketches enclosed which are illustrative and not limitative, and in which:
- fig. 1.a and 1.b are respectively a side view and a view from the top, of a blank destined to be subjected to rolling for form a screw according to the invention;
- fig. 2 is a side view of a half of the screw according to the invention being worked by the tool during the phase of rolling; and
- fig. 3 is a side view, partially in section, of the screw at the end of the method according to the invention.

The method for the production of screws for hinges in furniture according to the present invention involves two separate phases.

The first phase consists of the production of an intermediary product, hereinafter referred to as "the blank," with no threading portion. In this phase, cross-shaped slots are produced directly on the head of the screw, to enable a normal or crosshead screwdriver to be inserted in the normal use of the screw.

The second phase of the method involves the forming of the blank described above with a tool that impresses the threading on the body of the screw by rolling.

Preferably, to carry out this procedure the material used should be the one described in foundry terminology as "iron, a little below than annealing temperature". The material in the aforesaid condition has malleability properties that make it suitable to be worked cold in an economic way in the rolling phase.

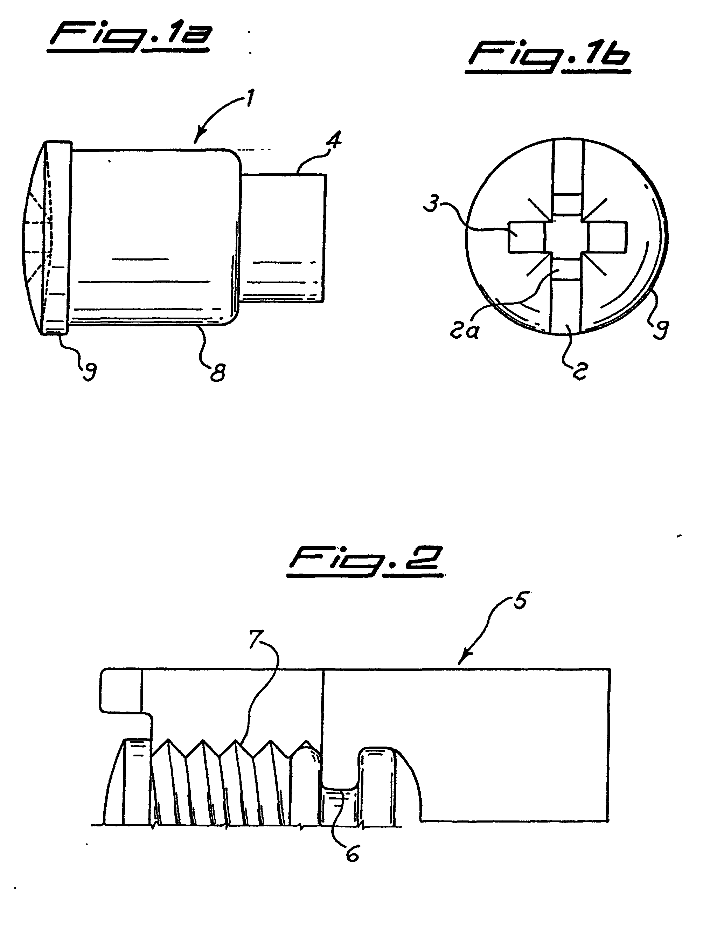

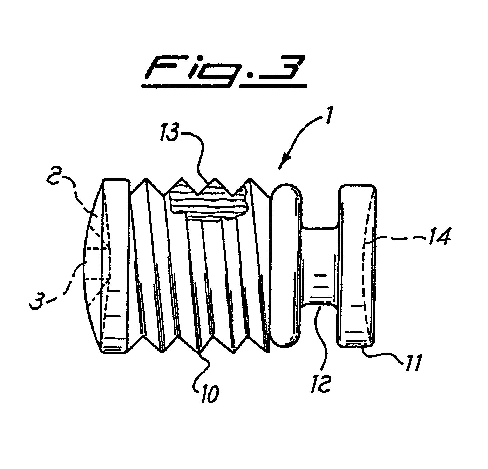

Figs. 1.a and 1.b show a screw 1 for furniture according to the invention in the form imparted to the blank after the first phase of the method according to the invention and before the phase of rolling. This form comprises a head 9, a body 8 and a terminal section 4, in which an head tang will be formed. Two slots 2 and 3 are visible on the head 9, arranged in a crosslike fashion. The slot 2 is such to divide the head 9 of the screw blank 1 into two sectors, while the slot 3 is shorter than slot 2 and does not touch the external edge of the head 9. Slot 2 allows the use of a normal screwdriver, while the inside portion 2a of slot 2, in combination with slot 3, allows the employment of a cross-head screwdriver. The particular shape of the slots, obtained by die forging, avoids the formation on the head of the blank 1 of four different sectors, which could break with the use of the screwdriver thus making the screw unusable.

Fig. 2 shows the contact between an element 5 of the forming tool and the screw for hinges in furniture 1, (only half the screw is shown), during the rolling phase. In this phase the blank is positioned between a pair of elements similar to the illustrated element 5 (of which only one is shown in the figure), and the forming is achieved by moving one element 5 in the direction perpendicular to the plane of the drawing, while the second element 5 of the tool stays firm and the blank rolls under pressure. Each element 5 comprises a plain matrix and presents a section 7 provided with reliefs that constitute an internal thread developed in plane and during the rolling phase, they are impressed onto the body 8 of the screw 1 to create the threaded section. The reliefs present on the element 5 are not of constant height, but they start almost from zero and increase in height along the plain matrix until they reach the final value. The reliefs of the tool, pressing against the piece being worked, crush portions of material to form the bottom of the threads, while portions of material are made to flow plastically to form the crests of the thread.

This causes an increase of the external diameter of the threaded section that brings it into line with the head 9, giving rise to the conformation of a type known in the art as "headless screw."

Furthermore, on each element 5 there is a prominence 6 that creates a groove in the terminal part 4 of the screw 1 to form an head tang. The prominence 6 compresses part of the material of the terminal section 4 causing the reduction of the diameter to form the groove 12. Since there is no removal of chip, the material in excess tends to flow plastically in the direction left free by the shape of the tool. Due to this phenomenon, the diameter of the piece in the portion of the terminal section 4 which is not being compressed increases to form an head tang 11 which presents a slight hollow 14.

Alternatively, it is also possible to effect the rolling of the blank, according to the method of the present invention, using a tool (not shown) comprising two threaded rollers which are made to rotate in the same direction and with the same peripheral speed while the blank is pressed and made to roll inside of the rollers.

Fig. 3 shows a screw 1 in the shape assumed at the end of the method according to the present invention. The screw 1 presents a threaded section 10 and an head tang 11, resulting from the formation of a groove 12 in the terminal part 4. The head tang 11 also presents a light hollow 14. There are slots 2 and 3, present on the head 9 and arranged as a cross. Fig. 3 also shows, in section, a portion 13 of the threaded section 10 in which is visible the direction of the fibers of the material after the rolling phase.

## Claims

1. A method for the production of a headless screw for furniture hinges, said screw comprising a first threaded section (10), a second distal section composed by a head tang (11) and a groove located between said first and second sections and having opposed parallel sides and a diameter substantially smaller than the diameter of said head tang (11), **characterized by** comprising: a first step of forming a blank in the form of a substantially cylindrical element having a first axial portion (8) having a diameter substantially equal to the average diameter of the threaded section (10) that is to be formed and a second axial portion (4) having a diameter that is less than the diameter of said first portion; and a second step of rolling said blank through a tool comprising plain matrices shaped to produce simultaneously the threading on the first axial section of the blank and the formation of said groove (12) and said head tang (11) by deformation of the material of the blank, said groove (12) and said cylindrical head tang (11) being obtained from said second axial portion (4) of the blank by means of the same operation.

2. A method according to Claim 1, **characterized by** the said tool for rolling being composed of two contrasted elements, at least one of which comprises a first portion equipped with internal thread reliefs and a second portion provided with a prominence and with a hollow to create said groove (12) and to form the body of said head tang (11).

3. A method according to Claim 2, **characterized by** carrying out said rolling by moving one of the two said elements with respect to the other and by rolling the said blank between the two said elements.

4. A method according to Claims from 1 to 3, **characterized by** the fact that the material that composes said blank is iron in the condition of 'little below annealing temperature".

5. A one-piece headless screw for furniture hinges comprising a first threaded section (10) and a second distal section composed by a head tang (11), a groove (12) located between said first and second sections and having opposed parallel sides and a diameter substantially smaller than the diameter of said head tang (11), as obtainable according to the method of any claim 1 to 4.

6. A headless screw according to claim 6, wherein the terminal surface of said head tang has a hollow (14).

## Patentansprüche

1. Verfahren zur Herstellung von "kopflosen" Schrauben für Möbelscharniere, wobei die genannte Schraube einen ersten Gewindeabschnitt (10), einen zweiten distalen Abschnitt, der von einem Kopfzapfen (11) gebildet wird, sowie eine Auskehlung umfasst, die zwischen dem ersten und dem zweiten Abschnitt vorgesehen ist, und entgegengesetzte parallele Seiten und einen Durchmesser aufweist, der kleiner ist als der Durchmesser des genannten Kopfzapfens (11),
**gekennzeichnet durch** die folgenden Schritte: erster Schritt: die Herstellung eines Rohlings in Form eines im wesentlichen zylindrischen Elements mit einem ersten axialen Segment (8) mit einem Durchmesser, der im wesentlichen gleich dem durchschnittlichen Durchmesser des zu bildenden Gewindeabschnitts (10) ist, und einem zweiten axialen Segment (4) mit einem Durchmesser, der kleiner ist als der Durchmesser des genannten ersten axialen Segments; zweiter Schritt: das Walzen des genannten Rohlings in einem Werkzeug, umfassend offene Matrizen, die so ausgebildet sind, daß sie gleichzeitig das Gewinde am ersten axialen Segment des Rohlings herstellen und die Formung der genannten Auskehlung (12) und des genannten Kopfzapfens (11) **durch** Verformung des Rohlingwerkstoffs vornehmen, wobei die genannte Auskehlung (12) und der genannte Kopfzapfen (11) aus dem zweiten axialen Segment (4) des Rohlings mittels des gleichen Vorgangs gefertigt werden.

2. Verfahren nach Anspruch 1,
**dadurch gekennzeichnet,**
**daß** das genannte Walzwerkzeug aus zwei gegensätzlichen Elementen aufgebaut ist, von denen zumindest eines einen ersten Abschnitt umfasst, der mit einem Innengewindeprofil, und einen zweiten Abschnitt, der mit einem Vorsprung und einer Ausnehmung versehen ist, um die genannte Auskehlung (12) zu erzeugen und den Grundkörper des genannten Kopfzapfens (11) zu formen.

3. Verfahren nach Anspruch 2,
**gekennzeichnet durch** das Ausführen des genannten Walzens, indem eines der genannten zwei gegensätzlichen Elemente gegenüber dem anderen bewegt wird, und indem der genannte Rohling zwischen den zwei genannten Elementen gewalzt wird.

4. Verfahren nach den Ansprüchen 1 bis 3
**dadurch gekennzeichnet, daß** der Werkstoff, aus dem der Rohling besteht, Eisen in dem Zustand "etwas unterhalb der Glühtemperatur" ist.

5. Einstückige "kopflose" Schraube für Möbelschamiere, umfassend einen ersten Gewindeabschnitt (10) und einen zweiten distalen Abschnitt, der von einem Kopfzapfen (11) gebildet wird, eine Auskehlung (12), die zwischen dem genannten ersten und dem genannten zweiten Abschnitt vorgesehen ist, sowie entgegengesetzte parallele Seiten und einen Durchmesser, der im wesentlichen kleiner ist als der Durchmesser des genannten Kopfzapfens (11), und wie sie durch das Verfahren gemäß einem der Ansprüche 1 bis 4 herstellbar ist.

6. Kopflose Schraube nach Anspruch 6,
wobei die endständige Oberfläche des genannten Kopfzapfens eine Vertiefung (14) aufweist.

## Revendications

1. Procédé de fabrication d'une vis sans tête pour charnières de meuble, ladite vis comprenant une première partie filetée (10), une deuxième partie distale constituée par une tête décolletée (11) et une gorge située entre les dites première et deuxième parties et ayant des côtés opposés parallèles et un diamètre sensiblement plus petit que le diamètre de ladite tête (11), **caractérisé en ce qu'**il comprend : une première étape de formation d'une ébauche sous la forme d'un élément sensiblement cylindrique comportant une première partie axiale (8) de diamètre sensiblement égal au diamètre moyen de la partie filetée (10) à former, et une deuxième partie axiale (4) de diamètre inférieur au diamètre de ladite première partie ; et une deuxième étape de roulage de ladite ébauche au moyen d'un outil incluant des matrices ordinaires configurées pour produire simultanément le filetage sur la première partie axiale de l'ébauche et la formation de ladite gorge (12) et de ladite tête (11) par déformation de la matière de l'ébauche, ladite gorge (12) et ladite tête cylindrique (11) étant engendrées à partir de ladite deuxième partie axiale (4) de l'ébauche par la même opération.

2. Procédé selon la revendication 1, **caractérisé en ce que** ledit outil de roulage est composé de deux éléments en opposition, dont au moins un comprend une première portion présentant des reliefs de filetage intérieur, et une deuxième portion présentant une saillie et un creux pour créer ladite gorge (12) et former le corps de ladite tête (11).

3. Procédé selon la revendication 2, **caractérisé en ce que** ledit roulage est exécuté par déplacement d'un des dits deux éléments par rapport à l'autre et par roulage de ladite ébauche entre lesdits deux éléments.

4. Procédé selon les revendications 1 à 3, **caractérisé en ce que** la matière qui compose ladite ébauche est du fer à l'état de « température un peu inférieure à la température de recuit ».

5. Vis sans tête monobloc pour charnières de meuble, comprenant une première partie filetée (10) et une deuxième partie distale constituée d'une tête décolletée (11), une gorge (12) située entre les dites première et deuxième parties et ayant des côtés opposés parallèles et un diamètre sensiblement plus petit que le diamètre de ladite tête (11), qui peut être obtenue par le procédé selon une quelconque des revendications 1 à 4.

6. Vis sans tête selon la revendication 6, dans laquelle la surface terminale de ladite tête présente un creux (14).
